# EUROPEAN PATENT SPECIFICATION

(11) **EP 2 857 215 B1**
(45) Date of publication and mention of the grant of the patent: **02.08.2017**
(21) Application number: 14187913.0
(22) Date of filing: 07.10.2014
(51) Int. Cl.: B42C 15/00, B42D 3/00

(54) **APPARATUS AND METHOD FOR APPLYING A COVERING FILM TO A BOOK**
VORRICHTUNG UND VERFAHREN ZUM ANBRINGEN EINER DECKFOLIE AN EINEM BUCH
APPAREIL ET PROCÉDÉ POUR APPLIQUER UN FILM DE COUVERTURE SUR UN LIVRE

(30) Priority: 07.10.2013 GB 201317664
(43) Date of publication of application: 08.04.2015
(73) Proprietor: Ryan, Alan, County Wicklow (IE); Ryan, Gerald, County Wicklow (IE)
(72) Inventor: Ryan, Alan, County Wicklow (IE); Ryan, Gerald, County Wicklow (IE)
(74) Representative: Casey, Alan Michael

(56) References cited:
- DE-A1- 19 639 575
- DE-B- 1 103 294
- GB-A- 2 155 857

## Description

### Technical Field

This invention relates to apparatuses and methods for applying a covering film to a book.

### Background Art

Adhesive covering films for books are widely available. In most cases these are applied manually by removing a release paper covering the adhesive, carefully positioning the book against the adhesive surface of the film, applying the adhesive film to the front and back covers and spine, taking care to avoid or eliminate bubbles, and finally trimming off the excess film.

This procedure is time consuming for large numbers of books, making it inefficient for libraries, booksellers or publishers wishing to cover large numbers of books at the same time. Experience shows that a skilled worker can typically cover 38-60 books per hour with this method.

GB2155857 discloses a method and apparatus for laminating a protective outer jacket onto the cover of a book, which may be a hard-limp or paper-back book.

### Disclosure of the invention

The present teaching provides an apparatus as detailed in claim 1 and a method according to claim 11. Advantageous features are provided in dependent claims.

There is provided an apparatus for applying a covering film to a book, the book having front and rear covers and a spine, the apparatus comprising:
a gate mechanism having open and closed states, which in the closed state presents a front surface against which a covering film may be overlaid whereby the spine of a book may be pressed onto the covering film overlaying the front surface, and which in the open state admits the book to a space rearward of the gate beyond the front surface such that the book draws the covering film into said space; and
a laminating mechanism positioned rearwardly of the gate, the laminating mechanism operable to receive a book admitted beyond the gate, and to apply pressure against said film onto the front and rear covers of the book to cover the book with the film.

By presenting a front surface which can be used to support a covering film, and against which the spine of a book can be pressed to sandwich the covering film between the spine and the front surface, the book can be quickly positioned correctly on the (typically adhesive) covering film. Then by the simple mechanism of opening the gate and admitting the book into a laminating mechanism beyond the gate, we ensure that the covering film, already in position against the spine (and adhered to it if the film is adhesive-coated), is fully laminated to the book's front and back covers.

In contrast to the rate of 38-60 books per hour which a skilled worker can achieve using manual methods, machines according to the invention can process over 300 books per hour.

The laminating mechanism comprises at least a first roller and a second roller operable in combination to receive the book and to apply pressure against said film onto the front and rear covers thereof as the book passes between the rollers.

A motor may be provided to drive at least one roller. There can be a linkage for driving both rollers from a common motor. Alternatively each roller may have its own respective motor. Again alternatively, only one roller may be driven, the other being caused to turn by the pressure of the book against it as the book is moved by the driven roller.

The gate mechanism comprises a pair of doors each hinged at a respective outer edge, wherein in the closed state the doors meet at a respective inner edge, and wherein in the open state the doors hinge rearwardly about their outer edges to admit the book into said space between said inner edges.

The gate mechanism comprises a pair of doors which when in the closed state meet at a respective inner edge, and which are arranged to slide apart resulting in a gap between the respective inner edges to admit the book therebetween.

The doors, in either case, preferably provide a continuous and substantially unbroken, flat surface with any gap between the doors being of a size substantially smaller than the width of a conventional book, i.e. the gap being less than 5 mm, more preferably less than 2 mm, more preferably less than 1 mm. Such a surface acts as a flat table against which the book may be compressed onto the covering film before the doors are opened.

There is preferably a guide mechanism which receives a book and presents the spine of the book onto the front surface.

More preferably, the gate mechanism comprises a pair of doors which when in the closed state meet at a respective inner edge, and wherein said guide mechanism is positioned relative to the pair of doors to present the spine of the book onto the adjacent inner edges of the doors.

Preferably, the guide mechanism comprises first and second plates biased against one another to retain the book when introduced between the plates, while allowing the book to be pushed through and beyond the plates when the gate mechanism is open.

The plates may be biased together to form a generally Y-shaped guide mechanism, the stem of the Y-shape being formed by abutting surfaces of the two plates, and the upper branches of the Y-shape being respectively formed by an angled portion of each plate.

As an alternative to angled plates, the plates can be curved along some or all of their height so that they flare away from one another to provide a guide into which the book can be admitted.

The gate mechanism comprises a pair of doors which when in the closed state meet at a respective inner edge, the inner edges moving apart when the gate is in the open state, the first and second rollers can each be mounted on a respective one of the pair of doors rearwardly thereof adjacent the inner edge of the respective door.

The first and second rollers are biased against one another when the doors are closed, meeting at a point in line with the meeting point of the inner edges of the doors, and when the gate is in an open state each roller moves under a biasing force beyond the inner edge of the door on which it is mounted.

A gate motor is preferably provided for opening said gate. Where there are a pair of doors, there can be a respective pair of gate motors such that each gate motor drives a respective one of said doors to open said gate.

Alternatively, where the gate comprises a pair of doors, the apparatus may further comprise a linkage for driving both doors from a common gate motor. This arrangement is currently preferred as a very precise and synchronised opening of the doors can be achieved, with the gap increasing uniformly on either side of a centre line as the doors open, which assists in admitting the book and cover reliably to the laminating mechanism.

There is preferably a controller for activating the or each gate motor and the or each roller motor in synchronicity.

The apparatus may further include a film supply mechanism for receiving a roll of covering film such that a length thereof may be drawn across said front surface in advance of a book being received. In this embodiment, the film can then be cut to a suitable length before or after the book is pressed onto the film and before the gate is opened.

Alternatively, the covering film may be supplied in lengths and individual lengths can be simply placed into position.

Preferably, the apparatus further comprises a stop structure adjacent said gate on the front said thereof, said stop structure allowing alignment of an edge of said film with a face of said book.

There is also provided a method of applying a covering film to a book, the book having front and rear covers and a spine, the method comprising:
providing a gate mechanism having open and closed states, which in the closed state presents a front surface against which a covering film may be overlaid whereby the spine of a book may be pressed onto the covering film overlaying the front surface, and which in the open state admits the book to a space rearward of the gate beyond the front surface such that the book draws the covering film into said space;
providing a laminating mechanism rearwardly of the gate, the laminating mechanism operable to receive a book admitted beyond the gate, and to apply pressure against said film onto the front and rear covers of the book to laminate the film against the front and rear covers;
placing a cover film to overlay said front surface;
pressing a spine of a book onto said cover film overlaying the front surface;
opening the gate to admit the book to said space such that the book draws the covering film into said space; and
laminating the film against the front and rear covers with said laminating mechanism.

Preferably, the film is adhesive on some or all of one side thereof, the adhesive side being placed facing away from the front surface, and the adhesive being a pressure adhesive, wherein the laminating process applies pressure to adhere the film to the front and rear covers.

The laminating mechanism comprises a pair of pressure rollers which receive the book and compress the film against the front and rear covers.

Preferably, the film is adhesive on some or all of one side thereof, the adhesive side being placed facing away from the front surface, and the adhesive being heat activated, further comprising the step of heating the film as part of the laminating process to adhere the film to the front and rear covers.

When the adhesive is heat activated, the laminating mechanism comprises a pair of pressure rollers which receive the book and compress the film against the front and rear covers, where the rollers are heated.

### Brief Description of Drawings

Fig. 1 is a perspective view of an apparatus for applying a covering film to a book;
Figs. 2-6 are schematic views of the apparatus of Fig. 1, shown during successive stages of applying a covering film to a book.
Fig. 7 is a perspective view of a covered book;
Fig. 8 is an elevation of a covered book; and
Figs. 9-11 are schematic views of a second apparatus for applying a covering film to a book, shown during successive stages of applying a covering film to a book.

### Detailed Description of Preferred Embodiments

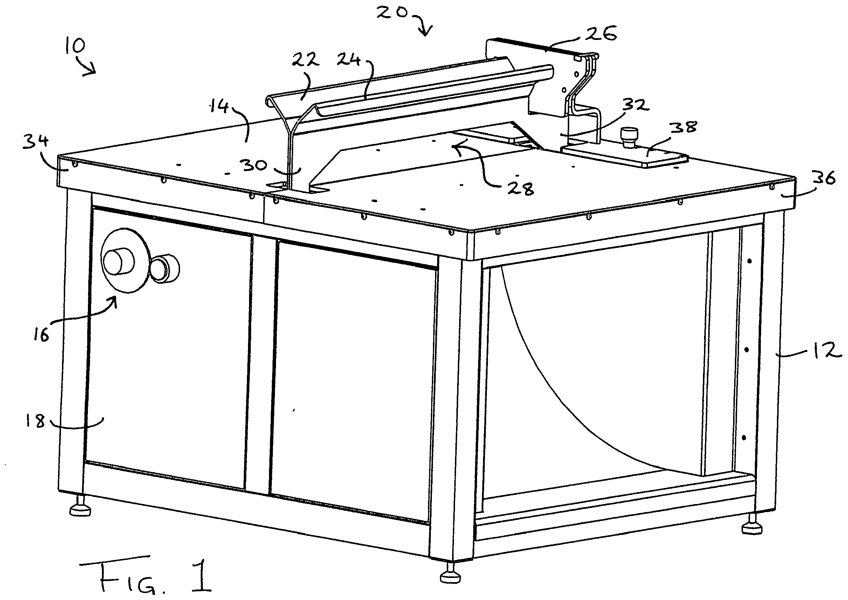

In Fig. 1 there is indicated, generally at 10, an apparatus for applying a covering film to a book. The apparatus is embodied in the general form of a cabinet 12 having a work surface or front surface 14, with operator controls 16 on a face 18 of the cabinet, and a guide and stop assembly 20 located above the front surface.

The guide and stop assembly has three main elements: a left-hand guide plate 22, a right-hand guide plate 24, and a back stop structure 26. The guide plates are biased towards each other to provide a generally Y-shaped guide into which a book can be introduced from above.

The guide plates each have a cut-away so that a gap 28 is defined between a pair of legs 30,32 which extend from the guide plates down into the cabinet 20 where the biasing mechanism is situated. As a result of this gap's existence, the work surface or front surface 14 is largely unobstructed over the majority of its area.

The front surface 14 is composed of the upper faces of two sliding doors 34,36 whose operation will be described further below. On each door, a stop plate 38 is mounted which is aligned vertically with the face of the back stop structure 26 (only the stop plate 38 on the right-hand door 36 is indicated by reference numeral). Due to this alignment, it will be appreciated that a covering film (which is assumed to have a straight edge) can be overlaid on the front surface 14, abutting against the pair of stop plates 38. Then a book can be introduced, spine first, between the guide plates 22,24 (forcing them apart) while abutting against the stop plate 26. Pushing the book down onto the covering film will result in an aligned covering film which is squared relative to the book's axis. (It may be preferred that the stop plates 38 are recessed, relative to the back stop structure 26, by a millimetre or two, in which case the covering film will extend beyond the edge of the book by a corresponding amount. While this gives a greater margin of error for an operator, it results in a requirement to trim the film along this edge, as discussed further below.)

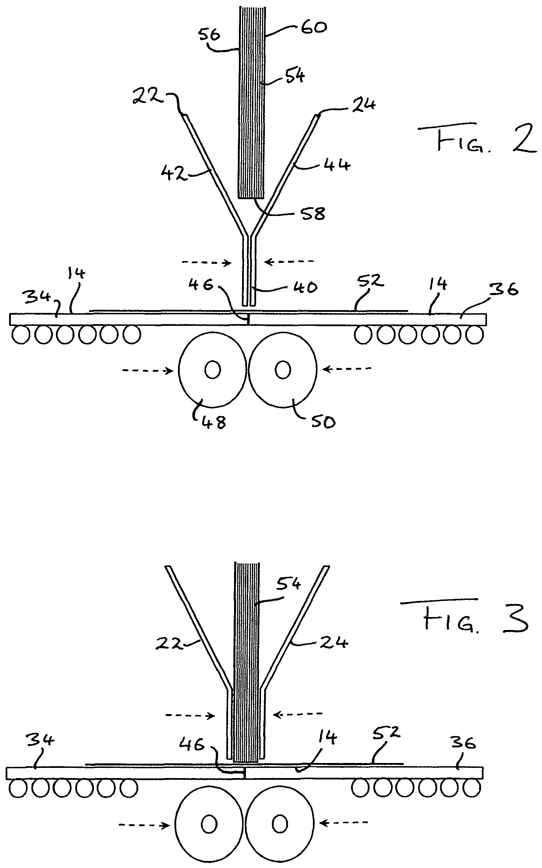

Referring now to Fig. 2, the mechanism can be seen in schematic cross section, taken in a plane parallel to the surface of the back stop structure seen in Fig. 1, i.e. transverse to the plane along which the guide plates 22,24 meet.

In Fig. 2 we can see the guide plates 22,24 each have an angled structure, so that when biased together (as indicated by the dotted arrows) they form a generally Y-shaped guide mechanism, the stem 40 of the Y-shape being formed by abutting surfaces of the two plates, and the upper branches 42,44 of the Y-shape being respectively formed by an angled portion of each plate 22,24. There is no reason why other shapes could not also be used to guide a book into a desired position, which is aligned with a meeting point 46 between the two sliding doors 34,36 which together provide the front surface 14.

The terms "front" and "forward", as opposed to "rear" and rearward", as used herein, denote the directions outside and inside the doors 34,36, respectively. Thus the guide plates 22,24 are forward of the front surface 14, while the two laminating rollers 48,50 seen in Fig. 2 are rearward of the doors 34,36 and the front surface 14.

As seen in Fig. 2, a covering film 52, has been placed in position, overlaying the front surface 14. The covering film may be, for example, an adhesive coated polyester film of known type, which is supplied in standard sizes with a release liner protecting the contact adhesive. In use the adhesive is exposed by removing the release liner, and the film 52 is placed, adhesive side up, on the front surface, generally centred over the line 46 where the doors meet, and with one edge abutting against the stop plate 38 (Fig. 1). The alignment of the cover against the back stop is precise and easily achieved, while the requirement to generally centre the cover over the mid line 46 is less critical - the positioning only needs to be as accurate as is required to ensure that enough film extends on either side to cover half the spine and either the rear or front cover of the book 54. Typically, the covers will be from a few millimetres to (preferably) a few centimetres bigger in each direction than the combined width (front cover 56 + spine 58 + back cover 60) and the height of the book.

Fig. 3 shows the next stage of operation, with the book 54 pressed fully down onto the covering film 52, which is thus sandwiched between the book's spine and the front surface 14 of the abutting doors 34,36. Due to the biasing force on the guide plates 22,24, the book is precisely aligned over the line 46 where the doors 34,36 abut.

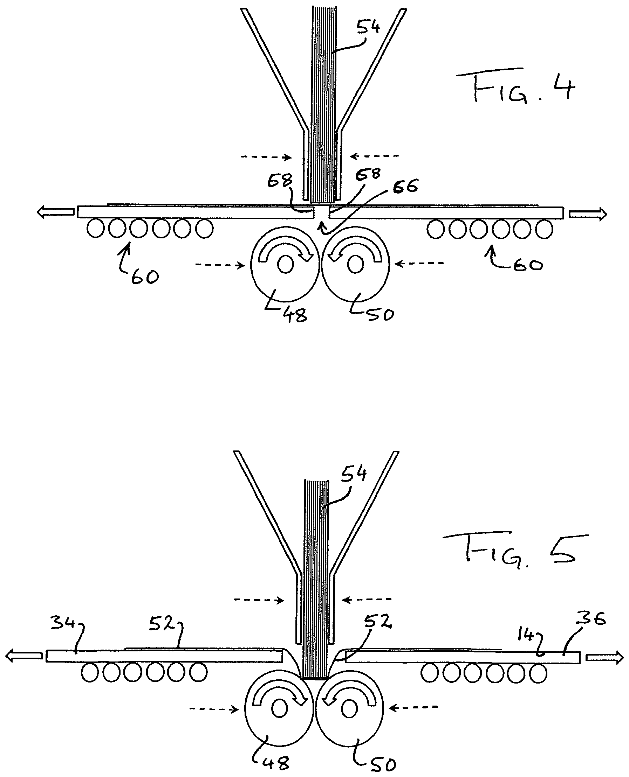

Fig. 4 shows the apparatus just after the operator has engaged one of the controls 16 (i.e. a "start" button) which actuates both a gate motor (not shown) and a pair of roller motors (not shown). A single gate motor is used to drive apart the doors and thereby open a gap 66 below the spine of the book 54. By using a precise linkage, the motion of the two doors can be tied, so that the inner edges 68 are always the same distance from the centre line. One could, alternatively, have a pair of gate motors. A set of bearings 60 is provided for each door 34,36 to support it in smoothly sliding open/

Each of the laminating rollers is driven by its own motor, in the direction indicated, such that they will pull a book engaging with them from a forward to a rearward direction. Biasing spring force on the rollers ensures that they exert pressure against a book's covers as they draw it rearwardly.

In Fig. 5, the gate (doors 34,36) has opened beyond the thickness of the book 54, allowing the operator to push the book rearwardly of the front surface 14. As the spine had already adhered to the covering film 52, it is pulled evenly rearwards towards the laminating rollers 48,50 which catch the edges of the spine at the moment captured in Fig. 5.

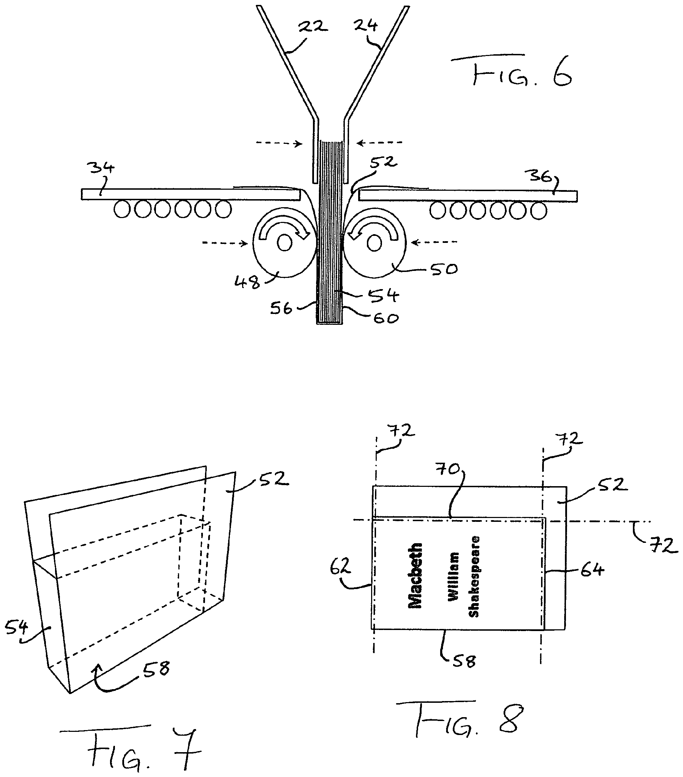

As shown in Fig. 6, the rollers are forced apart by the book and they drive the book rearwardly, simultaneously compressing the adhesive surface of the covering film 52 (which continues to be drawn in by the book 54) and adhering the film to the book's front and rear covers 56,60. In Fig. 6 the gate is fully open and the doors are no longer moving. The maximum gap can be fixed at a size big enough to accommodate most commercially produced books, or it can be adjustable by the operator for a given batch of books.

It will be noted that throughout the process shown in Figs. 2-6, the vertical alignment of the book is controlled by the biasing force provided by the Y-shaped guide 22,24 and the roller 48,50. Once the book is free of the guide and of the rollers, it drops below the rollers for further processing such as by dropping onto a conveyor belt leading to a trimming station.

Figs. 7 and 8 show a covered book 54 which has been covered with film 52 by the machine of Figs. 1-6. It can be seen that the film 52 is flush with the top edge 62 of the book due to the previously discussed stop structure 26 and stop plates 38 (Fig. 1). At the other edges (bottom edge 64 and fore edge 70) the film 52 extends beyond the book's edges. Therefore the final step is to trim the book and cover using a guillotine or dedicated trimming machine along the trimming lines 72 identified in Fig. 8. In this way, a millimetre or so is sacrificed along each edge to achieve a sharp edge where the film is flush with the edges of the books' front and rear covers and spine.

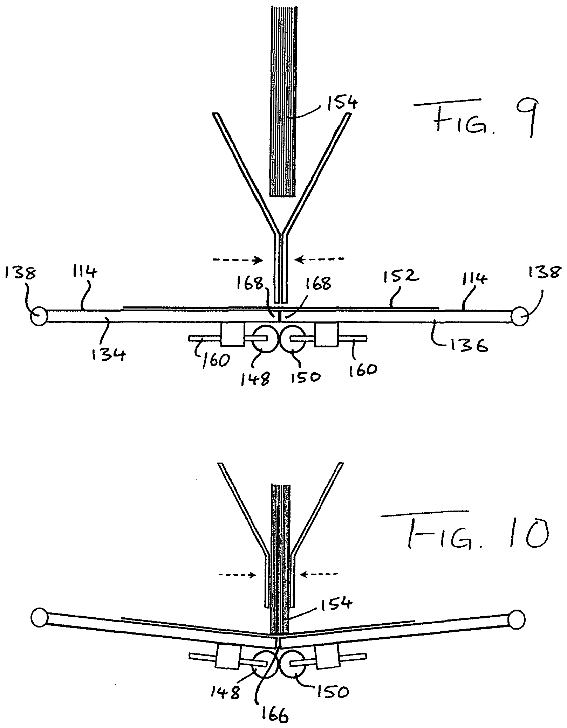

Figs. 9-11 show an alternative embodiment, using similar views to those of Figs. 2, 4 and 6. However, the embodiment of Figs. 9-11 differs in two major respects. Similar parts to the earlier embodiment are indicated with reference numerals that differ by 100 (e.g. book 154 vs. book 54).

Firstly, the gate and front surface 114 are provided by doors 134,136 which are each hinged along an outer edge 138 (Fig. 9). The doors hinge rearwardly when the operator actuates the controls (after the book 154 has been pressed onto the covering film 152 overlaying the front surface 114), a gap 166 develops due to the hinging action of the doors.

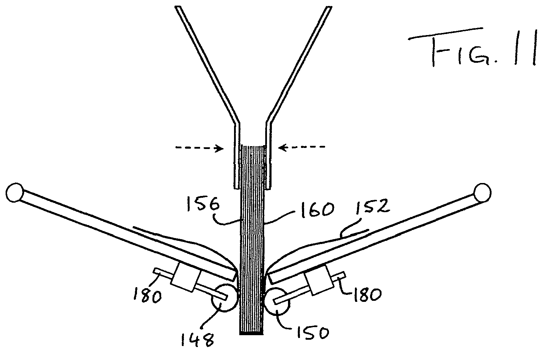

Secondly, the laminating rollers 148,150 are mounted on to the rearward side of the doors, adjacent the inner edges 168. The rollers 148,150 are carried on brackets 180 which are spring loaded and biased towards each other. Thus it can be seen that as the doors begin to open (Fig. 10), the rollers remain in contact with each other. Then in Fig. 11, the rollers have moved sufficiently to project beyond the inner edge of each door and thereby engage with and press against the book's covers 156,160 to laminate the book and, due to the motors, draw it rearwardly past the doors.

The invention is not limited to the embodiments disclosed herein which can be varied without departing from the scope of the claimed invention.

## Claims

1. An apparatus (10) for applying a covering film to a book, the book having front and rear covers and a spine, the apparatus comprising:
a. a gate mechanism having open and closed states, which in the closed state presents a front surface (14) against which a covering film may be overlaid whereby the spine of a book may be pressed onto the covering film overlaying the front surface (14), and which in the open state admits the book to a space rearward of the gate beyond the front surface (14) such that the book draws the covering film into said space; and
b. a laminating mechanism positioned rearwardly of the gate, the laminating mechanism operable to receive a book admitted beyond the gate, and to apply pressure against said film onto the front and rear covers of the book to cover the book with the film,
Wherein the gate mechanism comprises a pair of doors (34, 36) which when in the closed state meet at a respective inner edge, the inner edges moving apart when the gate is in the open state, wherein the laminating mechanism comprises at least a first roller (48) and a second roller (50) operable in combination to receive the book and to apply pressure against said film onto the front and rear covers thereof as the book passes between the rollers (48, 50), and wherein the first and second rollers (48, 50) are each mounted on a respective one of the pair of doors (34, 36) rearwardly thereof adjacent the inner edge of the respective door (34, 36),
and wherein the first and second rollers (48, 50) are biased against one another when the doors (34, 36) are closed, meeting at a point in line with the meeting point of the inner edges of the doors (34, 36), and when the gate is in an open state each roller (48, 50) moves under a biasing force beyond the inner edge of the door (34, 36) on which it is mounted.

2. An apparatus (10) as claimed in claim 1, further comprising a roller motor for driving at least one of said rollers (48, 50).

3. An apparatus (10) as claimed in claim 2, further comprising a second roller motor such that each roller motor drives a respective one of said rollers (48, 50), and optionally further comprising a linkage for driving both rollers (48, 50) from a common roller motor.

4. An apparatus (10) as claimed in any preceding claim, wherein the pair of doors (34, 36) of the gate mechanism are each hinged at a respective outer edge, wherein in the closed state the doors (34, 36) meet at the respective inner edge, and wherein in the open state the doors (34, 36) hinge rearwardly about their outer edges to admit the book into said space between said inner edges.

5. An apparatus (10) as claimed in any of claims 1 to 3, wherein the pair of doors (34, 36) of the gate mechanism when in the closed state meet at the respective inner edge, and are arranged to slide apart resulting in a gap between the respective inner edges to admit the book therebetween.

6. An apparatus (10) as claimed in any preceding claim, further comprising a guide mechanism which receives a book and presents the spine of the book onto the front surface (14).

7. An apparatus (10) as claimed in claim 6, wherein the pair of doors (34, 36) of the gate mechanism when in the closed state meet at a respective inner edge, and wherein said guide mechanism is positioned relative to the pair of doors (34, 36) to present the spine of the book onto the adjacent inner edges of the doors (34, 36).

8. An apparatus (10) as claimed in claim 6 or 7, wherein the guide mechanism comprises first and second plates (22, 24) biased against one another to retain the book when introduced between the plates (22, 24), while allowing the book to be pushed through and beyond the plates (22, 24) when the gate mechanism is open,
optionally wherein the plates (22, 24) are biased together to form a generally Y-shaped guide mechanism, the stem of the Y-shape being formed by abutting surfaces of the two plates (22, 24), and the upper branches of the Y-shape being respectively formed by an angled portion of each plate (22, 24).

9. An apparatus (10) as claimed in any preceding claim, further comprising a gate motor for opening said gate, and optionally being configured in at least one of the following ways:
further comprising a second gate motor such that each gate motor drives a respective one of said doors (34, 36) to open said gate;
further comprising a linkage for driving both doors (34, 36) from a common gate motor; and
further comprising a controller for activating the or each gate motor and the laminating mechanism in synchronicity.

10. An apparatus (10) as claimed in any preceding claim, being configured in at least one of the following ways:
further comprising a film supply mechanism for receiving a roll of covering film such that a length thereof may be drawn across said front surface (14) in advance of a book being received; and
further comprising a stop structure adjacent said gate on the front said thereof, said stop structure allowing alignment of an edge of said film with a face of said book.

11. A method of applying a covering film to a book, the book having front and rear covers and a spine, the method comprising:
a. providing a gate mechanism having open and closed states, which in the closed state presents a front surface (14) against which a covering film may be overlaid whereby the spine of a book may be pressed onto the covering film overlaying the front surface (14), and which in the open state admits the book to a space rearward of the gate beyond the front surface (14) such that the book draws the covering film into said space;
b. providing a laminating mechanism rearwardly of the gate, the laminating mechanism operable to receive a book admitted beyond the gate, and to apply pressure against said film onto the front and rear covers of the book to laminate the film against the front and rear covers;
c. placing a cover film to overlay said front surface (14);
d. pressing a spine of a book onto said cover film overlaying the front surface (14);
e. opening the gate to admit the book to said space such that the book draws the covering film into said space; and
f. laminating the film against the front and rear covers with said laminating mechanism,
wherein the gate mechanism comprises a pair of doors (34, 36) which when in the closed state meet at a respective inner edge, the inner edges moving apart when the gate is in the open state, wherein the laminating mechanism comprises at least a first roller (48) and a second roller (50) operable in combination to receive the book and to apply pressure against said film onto the front and rear covers thereof as the book passes between the rollers (48, 50), and wherein the first and second rollers (48, 50) are each mounted on a respective one of the pair of doors(34, 36) rearwardly thereof adjacent the inner edge of the respective door (34, 36),
and wherein the first and second rollers (48, 50) are biased against one another when the doors (34, 36) are closed, meeting at a point in line with the meeting point of the inner edges of the doors (34, 36), and when the gate is in an open state each roller moves under a biasing force beyond the inner edge of the door (34, 36) on which it is mounted.

12. A method as claimed in claim 11, wherein the film is adhesive on some or all of one side thereof, the adhesive side being placed facing away from the front surface (14), and the adhesive being a pressure adhesive, wherein the laminating process applies pressure to adhere the film to the front and rear covers.

13. A method as claimed in claim 11, wherein the film is adhesive on some or all of one side thereof, the adhesive side being placed facing away from the front surface (14), and the adhesive being heat activated, further comprising the step of heating the film as part of the laminating process to adhere the film to the front and rear covers,
optionally wherein the rollers (48, 50) are heated.

## Patentansprüche

1. Vorrichtung (10) zum Anbringen einer Deckfolie an einem Buch, wobei das Buch einen vorderen und einen hinteren Buchdeckel und einen Buchrücken aufweist, die Vorrichtung umfassend:
a. einen Tormechanismus, der einen offenen und geschlossenen Zustand aufweist, der im geschlossenen Zustand eine vordere Fläche (14) vorlegt, die mit einer Deckfolie bedeckt sein kann, wobei der Buchrücken gegen die Deckfolie gepresst sein kann, welche die vordere Fläche (14) bedeckt, und der im offenen Zustand das Buch in einen hinteren Raum des Tores hinter der vorderen Fläche (14) einlässt, so dass das Buch die Deckfolie in den Raum zieht; und
b. ein Laminiermechanismus, der rückseitig des Tores positioniert ist, wobei der Laminiermechanismus wirksam ist, um ein Buch aufzunehmen, das hinter das Tor gelassen wurde, und um Druck gegen die Folie auf den vorderen und hinteren Buchdeckel anzuwenden, um das Buch mit der Folie zu bedecken,
wobei der Tormechanismus ein Paar Türen (34, 36) umfasst, die, wenn sie sich im geschlossenen Zustand befinden, an einer entsprechenden Innenkante aufeinandertreffen, wobei die Innenkanten sich auseinanderbewegen, wenn sich das Tor im offenen Zustand befindet, wobei der Laminiermechanismus mindestens eine erste Walze (48) und eine zweite Walze (50) umfasst, die in Kombination wirksam sind, um das Buch aufzunehmen und Druck gegen die Folie auf den vorderen und hinteren Buchdeckel davon anzuwenden, wenn das Buch die Walzen (48, 50) passiert, und wobei die erste und zweite Walze (48, 50) jeweils an einer entsprechenden von dem Paar Türen (34, 36) rückwärtig davon angrenzend an die Innenkante der entsprechenden Tür (34, 36) montiert sind,
und wobei die erste und zweite Walze (48, 50) gegeneinander verspannt sind, wenn die Türen (34, 36) geschlossen sind, an einem Punkt aufeinandertreffen, der in einer Linie mit dem Treffpunkt der Innenkanten der Türen (34, 36) ist, und wenn sich das Tor in einem offenen Zustand befindet, sich jede Walze (48, 50) unter einer Spannkraft hinter die Innenkante der Tür (34, 36), an die sie montiert ist, bewegt.

2. Vorrichtung (10) nach Anspruch 1, ferner umfassend einen Walzenmotor zum Antreiben mindestens einer der Walzen (48, 50).

3. Vorrichtung (10) nach Anspruch 2, ferner umfassend einen zweiten Walzenmotor, so dass jeder Walzenmotor eine jeweilige der Walzen (48, 50) antreibt, und gegebenenfalls ferner umfassend ein Gestänge, um beide Walzen (48, 50) mit einem gemeinsamen Walzenmotor anzutreiben.

4. Vorrichtung (10) nach einem der vorhergehenden Ansprüche,
wobei das Paar Türen (34, 36) des Tormechanismus jede an einer jeweiligen Außenkante schwingen, wobei die Türen (34, 36) im geschlossenen Zustand an der entsprechenden Innenkante aufeinandertreffen, und wobei die Türen (34, 36) im offenen Zustand rückseitig um ihre Außenkanten schwingen, um das Buch in den Raum zwischen den Innenkanten einzulassen.

5. Vorrichtung (10) nach einem der Ansprüche 1 bis 3, wobei das Paar Türen (34, 36) des Tormechanismus, wenn sich dieser im geschlossenen Zustand befindet, an der entsprechenden Innenkante aufeinandertreffen und so angeordnet sind, dass sie auseinandergleiten, was zu einem Spalt zwischen den entsprechenden Innenkanten führt, um das Buch dazwischen einzulassen.

6. Vorrichtung (10) nach einem der vorhergehenden Ansprüche, ferner umfassend einen Führungsmechanismus, der ein Buch aufnimmt und den Buchrücken der vorderen Fläche (14) vorlegt.

7. Vorrichtung (10) nach Anspruch 6, wobei das Paar Türen (34, 36) des Tormechanismus, wenn sich dieser im geschlossenen Zustand befindet, an einer entsprechenden Innenkante aufeinandertreffen, und wobei der Führungsmechanismus relativ zum Paar Türen (34, 36) positioniert ist, um den Buchrücken den angrenzenden Innenkanten der Türen (34,36) vorzulegen.

8. Vorrichtung (10) nach Anspruch 6 oder 7, wobei der Führungsmechanismus eine erste und eine zweite Platte (22, 24) umfasst, die gegeneinander gespannt sind, um das Buch festzuhalten, wenn es zwischen die Platten (22, 24) eingeführt wird, während zugelassen ist, dass das Buch durch und hinter die Platten (22, 24) gedrückt wird, wenn der Tormechanismus offen ist,
wobei gegebenenfalls die Platten (22, 24) gegeneinander gespannt sind, um einen im Allgemeinen Y-förmigen Führungsmechanismus zu bilden, wobei der Schaft der Y-Form durch Stoßflächen der zwei Platten (22, 24) gebildet wird, und die oberen Verzweigungen der Y-Form jeweils von einem abgewinkelten Abschnitt jeder Platte (22, 24) gebildet ist.

9. Vorrichtung (10) nach einem der vorhergehenden Ansprüche, ferner umfassend einen Tormotor zum Öffnen des Tores, und gegebenenfalls auf mindestens eine der folgenden Arten ausgelegt:
ferner umfassend einen zweiten Tormotor, so dass jeder Tormotor eine entsprechende der Türen (34, 36) zum Öffnen des Tores antreibt;
ferner umfassend ein Gestänge zum Antreiben beider Türen (34, 36) mit einem gemeinsamen Tormotor; und
ferner umfassend eine Steuerung zum synchronen Einschalten des oder jedes Tormotors und des Laminiermechanismus.

10. Vorrichtung (10) nach einem der vorhergehenden Ansprüche, auf mindestens eine der folgenden Arten ausgelegt:
ferner umfassend einen Folienzufuhrmechanismus zum Aufnehmen einer Rolle Deckfolie, so dass eine Länge davon über die vordere Fläche (14) gezogen werden kann, bevor ein Buch aufgenommen wird; und
ferner umfassend eine Anschlagstruktur, die vorn an das Tor angrenzt, wobei die Anschlagstruktur Ausrichten einer Kante der Folie mit einer Buchfläche ermöglicht.

11. Verfahren zum Anbringen einer Deckfolie an ein Buch, wobei das Buch vordere und hintere Buchdeckel und einen Buchrücken aufweist, das Verfahren umfassend:
a. Bereitstellen eines Tormechanismus, der einen offenen und einen geschlossenen Zustand aufweist, der im geschlossenen Zustand eine vordere Fläche (14) vorlegt, die mit einer Deckfolie bedeckt sein kann, wobei der Buchrücken gegen die Deckfolie gepresst werden kann, welche die vordere Fläche (14) bedeckt, und der im offenen Zustand das Buch in einen hinteren Raum des Tores hinter der vorderen Fläche (14) einlässt, so dass das Buch die Deckfolie in den Raum zieht;
b. Bereitstellen eines Laminiermechanismus rückseitig des Tores, wobei der Laminiermechanismus wirksam ist, um ein Buch aufzunehmen, das hinter das Tor gelassen wurde, und um Druck gegen die Folie auf den vorderen und hinteren Buchdeckel anzuwenden, um die Folie gegen den vorderen und hinteren Buchdeckel zu laminieren;
c. Platzieren einer Deckfolie, um die vordere Fläche (14) zu bedecken;
d. Pressen eines Rückens eines Buchs gegen die Deckfolie, welche die vordere Fläche (14) bedeckt;
e. Öffnen des Tores, um das Buch in den Raum einzulassen, so dass das Buch die Deckfolie in den Raum zieht; und
f. Laminieren der Folie gegen den vorderen und hinteren Buchdeckel mit dem Laminiermechanismus,
wobei der Tormechanismus ein Paar Türen (34, 36) umfasst, die, wenn sie sich im geschlossenen Zustand befinden, an einer entsprechenden Innenkante aufeinandertreffen, wobei die Innenkanten sich auseinanderbewegen, wenn sich das Tor im offenen Zustand befindet, wobei der Laminiermechanismus mindestens eine erste Walze (48) und eine zweite Walze (50) umfasst, die in Kombination wirksam sind, um das Buch aufzunehmen und Druck gegen die Folie auf den vorderen und hinteren Buchdeckel davon anzuwenden, wenn das Buch die Walzen (48, 50) passiert, und wobei die erste und zweite Walze (48, 50) jeweils an einer entsprechenden von dem Paar Türen (34, 36) rückwärtig davon angrenzend an die Innenkante der entsprechenden Tür (34, 36) montiert sind,
und wobei die erste und zweite Walze (48, 50) gegeneinander verspannt sind, wenn die Türen (34, 36) geschlossen sind, an einem Punkt aufeinandertreffen, der sich in einer Linie mit dem Treffpunkt der Innenkanten der Türen (34, 36) ist, und wenn sich das Tor in einem offenen Zustand befindet, sich jede Walze (48, 50) unter einer Spannkraft hinter die Innenkante der Tür (34, 36), an die sie montiert ist, bewegt.

12. Verfahren nach Anspruch 11, wobei die Folie an einigen oder allen Seiten davon klebend ist, wobei die Klebeseite von der vorderen Fläche (14) abgewendet platziert ist, und wobei der Klebstoff ein Haftklebstoff ist, wobei der Laminiervorgang Druck anwendet, um die Folie auf den vorderen und hinteren Buchdeckel zu kleben.

13. Verfahren nach Anspruch 11, wobei die Folie an einigen oder allen Seiten davon klebend ist, wobei die Klebeseite von der vorderen Fläche (14) abgewendet platziert ist, und wobei der Klebstoff ein wärmeaktivierter Klebstoff ist, ferner umfassend den Schritt des Erwärmens der Folie als Teil des Laminiervorgangs, um die Folie an den vorderen und hinteren Buchdeckel zu kleben,
wobei gegebenenfalls die Walzen (48, 50) erwärmt sind.

## Revendications

1. Appareil (10) pour appliquer un film de couverture sur un livre, le livre ayant des couvertures avant et arrière et une tranche, l'appareil comprenant :
a. un mécanisme de barrière ayant des états ouvert et fermé, qui, dans l'état fermé, présente une surface avant (14) contre laquelle un film de couverture peut être recouvert moyennant quoi la tranche d'un livre peut être pressée contre le film de couverture recouvrant la surface avant (14), et qui, dans l'état ouvert, admet le livre dans un espace vers l'arrière de la barrière au-delà de la surface avant (14) de telle sorte que le livre tire le film de couverture dans ledit espace ; et
b. un mécanisme de stratification positionné vers l'arrière de la barrière, le mécanisme de stratification pouvant être utilisé pour recevoir un livre admis au-delà de la barrière, et pour appliquer une pression contre ledit film sur les couvertures avant et arrière du livre pour recouvrir le livre avec le film, dans lequel le mécanisme de barrière comprend une paire de portes (34, 36) qui, lorsqu'elles sont dans l'état fermé, se rejoignent au niveau d'un bord interne respectif, les bords internes s'éloignant lorsque la barrière est dans l'état ouvert, dans lequel le mécanisme de stratification comprend au moins un premier rouleau (48) et un second rouleau (50) pouvant être utilisés ensemble pour recevoir le livre et pour appliquer une pression contre ledit film sur les couvertures avant et arrière de celui-ci lorsque le livre passe entre les rouleaux (48, 50), et dans lequel les premier et second rouleaux (48, 50) sont chacun montés sur une porte respective de la paire de portes (34, 36) vers l'arrière de ceux-ci, adjacente au bord interne de la porte respective (34, 36),
et dans lequel les premier et second rouleaux (48, 50) sont sollicités l'un contre l'autre lorsque les portes (34, 36) sont fermées, se rejoignant au niveau d'un point aligné avec le point de rencontre des bords internes des portes (34, 36), et lorsque la barrière est dans un état ouvert, chaque rouleau (48, 50) se déplace sous l'effet d'une force de sollicitation au-delà du bord interne de la porte (34, 36) sur laquelle il est monté.

2. Appareil (10) selon la revendication 1, comprenant en outre un moteur de rouleau pour entraîner au moins un desdits rouleaux (48, 50).

3. Appareil (10) selon la revendication 2, comprenant en outre un second moteur de rouleau de telle sorte que chaque moteur de rouleau entraîne un rouleau respectif desdits rouleaux (48, 50), et éventuellement comprenant en outre une liaison pour entraîner les deux rouleaux (48, 50) à partir d'un moteur de rouleau commun.

4. Appareil (10) selon l'une quelconque des revendications précédentes, dans lequel la paire de portes (34, 36) du mécanisme de barrière est chacune reliée par charnière au niveau d'un bord externe respectif, dans lequel dans l'état fermé, les portes (34, 36) se rejoignent au niveau du bord interne respectif, et dans lequel, dans l'état ouvert, les portes (34, 36) sont articulées par charnière vers l'arrière autour de leurs bords externes pour admettre le livre dans ledit espace entre lesdits bords internes.

5. Appareil (10) selon l'une des revendications 1 à 3, dans lequel la paire de portes (34, 36) du mécanisme de barrière lorsqu'elles sont dans l'état fermé, se rejoignent au niveau du bord interne respectif, et sont agencées pour s'écarter en coulissant dans un vide entre les bords internes respectifs pour admettre le livre entre ceux-ci.

6. Appareil (10) selon l'une quelconque des revendications précédentes, comprenant en outre un mécanisme de guidage qui reçoit un livre et présente la tranche du livre sur la surface avant (14).

7. Appareil (10) selon la revendication 6, dans lequel la paire de portes (34, 36) du mécanisme de barrière lorsqu'elle est dans l'état fermé se rejoint au niveau d'un bord interne respectif, et dans lequel ledit mécanisme de guidage est positionné par rapport à la paire de portes (34, 36) pour présenter la tranche du livre sur les bords internes adjacents des portes (34, 36).

8. Appareil (10) selon la revendication 6 ou 7, dans lequel le mécanisme de guidage comprend des première et seconde plaques (22, 24) sollicitées l'une contre l'autre pour retenir le livre lorsqu'il est introduit entre les plaques (22, 24), tout en permettant au livre d'être poussé au travers et au-delà des plaques (22, 24) lorsque le mécanisme de barrière est ouvert, éventuellement dans lequel les plaques (22, 24) sont sollicitées l'une contre l'autre pour former un mécanisme de guidage généralement en forme de Y, la tige de la forme de Y étant formée en venant en butée contre des surfaces des deux plaques (22, 24), et les branches supérieures de la forme de Y étant respectivement formées par une partie inclinée de chaque plaque (22, 24).

9. Appareil (10) selon l'une quelconque des revendications précédentes, comprenant en outre un moteur de barrière pour ouvrir ladite barrière, et éventuellement étant configuré dans au moins une des façons suivantes :
comprenant en outre un second moteur de barrière de telle sorte que chaque moteur de barrière entraîne une porte respective desdites portes (34, 36) pour ouvrir ladite barrière ;
comprenant en outre une liaison pour entraîner les deux portes (34, 36) à partir d'un moteur de barrière commun ; et
comprenant en outre un dispositif de commande pour activer le ou chaque moteur de barrière et le mécanisme de stratification de façon synchronisée.

10. Appareil (10) selon l'une quelconque des revendications précédentes, étant configuré dans au moins une des façons suivantes :
comprenant en outre un mécanisme d'alimentation en film pour recevoir un rouleau de film de couverture de telle sorte qu'une longueur de celui-ci peut être tirée à travers ladite surface avant (14) avant qu'un livre ne soit reçu ; et
comprenant en outre une structure d'arrêt adjacente à ladite barrière sur ladite surface avant de celui-ci, ladite structure d'arrêt permettant l'alignement d'un bord dudit film avec une face dudit livre.

11. Procédé d'application d'un film de couverture sur un livre, le livre ayant des couvertures avant et arrière et une tranche, le procédé consistant à :
a. fournir un mécanisme de barrière ayant des états ouvert et fermé, qui, dans l'état fermé, présente une surface avant (14) contre laquelle un film de couverture peut être recouvert, moyennant quoi la tranche d'un livre peut être pressée sur le film de couverture recouvrant la surface avant (14), et qui, dans l'état ouvert, admet le livre dans un espace vers l'arrière de la barrière au-delà de la surface avant (14) de telle sorte que le livre tire le film de couverture dans ledit espace ;
b. fournir un mécanisme de stratification vers l'arrière de la barrière, le mécanisme de stratification pouvant être utilisé pour recevoir un livre admis au-delà de la barrière, et pour appliquer une pression contre ledit film sur les couvertures avant et arrière du livre pour stratifier le film contre les couvertures avant et arrière ;
c. placer un film de couverture pour recouvrir ladite surface avant (14) ;
d. presser une tranche d'un livre sur ledit film de couverture recouvrant la surface avant (14) ;
e. ouvrir la barrière pour admettre le livre dans ledit espace de telle sorte que le livre tire le film de couverture dans ledit espace ; et
f. stratifier le film contre les couvertures avant et arrière avec ledit mécanisme de stratification,
dans lequel le mécanisme de barrière comprend une paire de portes (34, 36) qui, lorsqu'elles sont dans l'état fermé, se rejoignent au niveau d'un bord interne respectif, les bords internes s'éloignant lorsque la barrière est dans l'état ouvert, dans lequel le mécanisme de stratification comprend au moins un premier rouleau (48) et un second rouleau (50) pouvant être utilisés en combinaison pour recevoir le livre et pour appliquer une pression contre ledit film sur les couvertures avant et arrière de celui-ci lorsque le livre passe entre les rouleaux (48, 50), et dans lequel les premier et second rouleaux (48, 50) sont chacun montés sur une porte respective de la paire de portes (34, 36) vers l'arrière de ceux-ci, adjacente au bord interne de la porte respective (34, 36),
et dans lequel les premier et second rouleaux (48, 50) sont sollicités l'un contre l'autre lorsque les portes (34, 36) sont fermées, se rejoignant en un point en ligne avec le point de rencontre des bords internes des portes (34, 36), et, lorsque la barrière est dans un état ouvert, chaque rouleau se déplace sous l'effet d'une force de sollicitation au-delà du bord interne de la porte (34, 36) sur laquelle il est monté.

12. Procédé selon la revendication 11, dans lequel le film est adhésif sur tout ou partie d'une face de celui-ci, la face adhésive étant orientée à l'opposé de la surface avant (14), et l'adhésif étant un adhésif sensible à la pression, dans lequel le processus de stratification applique une pression pour faire adhérer le film aux couvertures avant et arrière.

13. Procédé selon la revendication 11, dans lequel le film est adhésif sur tout ou partie d'une face de celui-ci, la face adhésive étant orientée à l'opposé de la surface avant (14) et l'adhésif étant activé à la chaleur, comprenant en outre l'étape consistant à chauffer le film dans le cadre du processus de stratification pour faire adhérer le film aux couvertures avant et arrière,
éventuellement dans lequel les rouleaux (48, 50) sont chauffés.
